# EUROPÄISCHE PATENTANMELDUNG

(11) **EP 1 187 415 A1**
(43) Veröffentlichungstag der Anmeldung: **13.03.2002**
(21) Anmeldenummer: 00119184.0
(22) Anmeldetag: 05.09.2000
(51) Int. Cl.: H04L 29/06, H04L 12/28

(54) **Verfahren zur Identifikation von Internet-Nutzern**

(71) Anmelder: SIEMENS AKTIENGESELLSCHAFT, 80333 München (DE)
(72) Erfinder: Mitreuter, Ulrich, Dr., 82547 Eurasburg (DE); Unger, Stefan, 82008 Unterhaching (DE); Zygan-Maus, Renate, Dr., 81477 München (DE)

(57) **Zusammenfassung**

Neue Internet-basierte Dienste erfordern eine Identifikation des Internet-Nutzers gegenüber einem Dienste-Anbieter.

Dieses Erfordernis wird erfindungsgemäß dadurch erfüllt, daß der Internet-Zugangs-Provider die IP-Nachrichten seiner Kunden auf Wunsch mit Daten versieht, die die Identifikation der IP-Pakete des Internet-Nutzers ermöglichen. Der Internet-Zugangs-Provider garantiert die Integrität dieser Daten mit kryptographischen Mitteln.

## Beschreibung

1.Welches technische Problem soll durch Ihre Erfindung gelöst werden?
2. Wie wurde dieses Problem bisher gelöst?
3. In welcher Weise löst Ihre Erfindung das angegebene technische Problem (geben Sie Vorteile an)?
4. Ausführungsbeispiel[e] der Erfindung.

### Zu Punkt 1: Welches technische Problem soll durch Ihre Erfindung gelöst werden?

Internet-Zugang wird für den Massenmarkt heute von den Internet-Zugangsprovidern ohne das Dienstmerkmal "netzweite Identifikation des Internet-Nutzers" angeboten. Neue Internet-basierte Dienste erfordern jedoch eine Identifikation des Internet-Nutzers gegenüber dem Dienste-Anbieter. Diese Identifikation soll auch gegen Manipulationen und Mißbrauch durch einen anderen Internet-Nutzer gesichert sein. Z.B. setzen Internet-Telefonie-Dienste und Internet-Telefonnetz-Konvergenzdienste voraus, daß der Nutzer dieser Dienste (d.h. der Absender der IP-Pakete, die die Dienst-Signalisierungsdaten beinhalten) identifiziert wird. Der Anbieter solcher neuen Internet-Dienste ist nicht notwendigerweise identisch mit dem Internet-Zugangs-Provider des Internet-Users.

Eine netzweite Einführung des erfindungsgemäßen Internet-User-Identifizierungsdienstes würde das Vertrauen in IP-Nachrichten wesentlich vergrößern und der Verbreitung kommerzieller Anwendungen mit ihren potentiell höheren Sicherheitsanforderungen sehr entgegenkommen sowie mithelfen, den Internet-Mißbrauch einzudämmen.

### Zu Punkt 2: Wie wurde dieses Problem bisher gelöst?

Die bisher bekannten Verfahren für die gesicherte Identifikation (Authentifikation) eines Internet-Nutzers verwenden alle das Prinzip der Ende-zu-Ende Authentisierung. D.h. die Kommunikationspartner authentisieren sich auf der Basis von Identifizierungs- und Authentisierungsdaten, die jedem Kommunikationspartner individuell zugeordnet und dem anderen Kommunikationspartner bekannt gemacht werden. Diese Daten können entweder
a) dem anderen Kommunikationspartner vor Beginn der Kommunikation bereits bekannt sein (hinreichende Identifizierungs- und Authentisierungsdaten sind beim Kommunikationspartner gespeichert) oder
b) dem anderen Kommunikationspartner beim Beginn der Kommunikation mithilfe einer vertrauenswürdigen 3. Instanz mitgeteilt werden (Identifizierungs- und Authentisierungsdaten sind bei einer zentralen öffentlichen Zertifizierungsinstanz gespeichert).

Bisher bekannte Prozeduren für die gesicherte Identifikation eines Internet-Nutzers sind:
I. Identifizierung und Authentisierung über die von den Kommunikationspartnern verwendeten IP-Hosts: IPSEC Diese Prozedur hat zur Voraussetzung, dass beide Kommunikationspartner statische IP-Adressen nutzen und diese IP-Adressen eineindeutig beiden Kommunikationspartnern zugeordnet sind.
   IPSEC ist für das zu lösende technische Problem nicht geeignet, da
   1. der Großteil der Internet-Nutzer Dial-in Zugang verwendet und von ihrem Internet-Zugangsprovidern nur eine temporäre IP-Adresse zugewiesen bekommen;
   2. IPSEC als Punkt-zu-Punkt Methode vom Typ a) die Speicherung der Identifizierungs- und Authentisierungsdaten aller potentiellen Kommunikationspartner erfordert und daher für den Massenmarkt neuer Internet-Dienste ungeeignet ist.
II. Identifizierung und Authentisierung durch TCP-Funktionen (TLS, Transport Layer Security) Diese Prozedur kann im Prinzip von allen Anwendungsprogrammen genutzt werden, die TCP/IP verwenden. Sie erfordert Anpassungen in den Anwendungsprogrammen sowie Bereitstellung von end-to-end Identifizierungs- und Authentisierungsdaten entweder nach Prinzip a) oder b).
III. Identifizierung und Authentisierung durch die verwendeten Anwendungsprogramme

Die Daten zur Identifizierung des Users, z.B. sein "Name", werden im Applikationsprotokoll (z.B. HTTP, FTP, Telnet, SIP) im Klartext übertragen. Für den Beweis, daß der Absender der Träger des Namens ist, d.h. für die Authentisierung des Namens, gibt es mehrere Möglichkeiten, z.B.
1. Ein gemeinsames Geheimnis, z.B. ein Paßwort, welches nur dem User und seinem Kommunikationspartner bekannt ist, wird im Applikationsprotokoll oder in den Applikationsnutzdaten mitübertragen. Diese Methode ist nur in Kombination mit einer gegen "Abhören" gesicherten (z.B. verschlüsselten) Übertragung einsetzbar.
2. Ein gemeinsames Geheimnis wird dazu verwendet, einen Teil der Nachricht zu verschlüsseln. Kann der Empfänger die Nachricht entschlüsseln, ist der Absender als Besitzer des Verschlüsselungschlüssels authentifiziert.
3. Durch ein Challenge-Response-Verfahren im Applikationsprotokoll wird der Beweis erbracht, daß der User im Besitz eines gemeinsamen Geheimnisses ist.
4. Ein gemeinsames Geheimnis wird dazu verwendet, einen digitalen Fingerabdruck der Nachricht zu erzeugen, der an die Nachricht angehängt wird. Kann dieser Fingerabdruck vom Empfänger reproduziert werden, ist der Absender als Besitzer des gemeinsamen Geheimnisses authentifiziert.
5. Der Absender erzeugt mit Hilfe seines "private key" eines asymmetrischen Authentifizierungsverfahrens einen digitalen Fingerabdruck der zu versendenden Nachricht, der an die Nachricht angehängt wird und hängt an die Nachricht zusätzlich sein elektronisches Zertifikat an. Dieses Zertifikat enthält den "public key" und den Namen des Users. Der Empfänger kann mit Hilfe dieses public key den digitalen Fingerabdruck verifizieren. Der Empfänger muß nun auch das Zertifikat verifizieren. Dies erfolgt entsprechend dem Standard-Verfahren für Zertifikate. Dazu enthält das Zertifikat einen digitalen Fingerabdruck der Daten des Zertifikats, angefertigt mit dem private key einer Zertifizierungsinstanz. Besitzt der Empfänger den öffentlichen Schlüssel der Zertifizierungsinstanz, kann er die Integrität des Zertifikats des Users überprüfen. Der Besitz des privaten Schlüssels, der für die Erzeugung des digitalen Fingerabdruckes der Nachricht verwendet wurde, authentifiziert den User.

Der Nachteil aller bekannten Verfahren ist der große Aufwand für die Installation, Administration und Pflege der verschiedenen Datenbanken, die die Identifikations- und Authentisierungsdaten der Internet-Nutzer enthalten (entweder zentrale, teure Zertifikat-Depots, oder viele dezentrale Subscriber-Datenbanken bei verschiedenen Diensteanbietern) sowie im Management der Infrastruktur, die die Integrität der Identifikationsdaten sichern soll (z.B. Zertifikat-Revocation-Listen, Security Policy Database). Dieser Aufwand ist dadurch gegeben, daß jeder Internet-Nutzer die Identifikations- und Authentifizierungs-prozeduren selbst durchführt (Prinzip der Ende-zu-Ende Authentisierung).

### Zu Punkt 3: In welcher Weise löst Ihre Erfindung das angegebene technische Problem (geben Sie Vorteile an)?

Der Internet-Zugangs-Provider versieht IP-Nachrichten seiner Kunden auf Wunsch mit Daten, die die Identifikation der IP-Pakete des Internet-Nutzers ermöglichen. Der Internet-Zugangs-Provider garantiert die Integrität dieser Daten mit kryptographischen Mitteln.

Der Unterschied zu den oben genannten bekannten Verfahren liegt also darin, daß nicht mehr der Internet-Nutzer selbst seine Identifikation initiiert sondern der Internet-Zugangs-Provider dies übernimmt. Durch die Erfindung wird der Aufwand für die Identifikation von IP-Paketen von Internet-Nutzern reduziert.

Voraussetzung für das erfindungsgemäße neue Identifizierungs- und Authentisierungsverfahren ist, dass der Internet-Zugangs-Provider mit dem Internet-Nutzer eine Geschäftsbeziehung unterhält. Damit besitzt er Daten, die den Internet-Nutzer identifizieren können. Nimmt der Internet-Nutzer den Zugangs-Dienst des Internet-Zugangs-Providers in Anspruch (z.B. beim Aufbau einer Internet-Verbindung über die Telefonleitung), so muß er sich dem Internet-Zugangs-Provider gegenüber zu Beginn authentifizieren (typischerweise mit einem Accountname und einem Passwort, welche der Internet-Zugangs-Provider gespeichert hat). Nach der Authentifizierung ist dem Internet-Zugangs-Provider die Identität des Internet-Nutzers somit gesichert bekannt. Er kann nun eine den Internet-Nutzer identifizierende Information allen IP-Paketen des Internet-Nutzers beifügen. Mit dieser Information können die IP-Pakete des Internet-Nutzers von anderen Internet-Dienst-Anbietern identifiziert werden, ohne daß der Internet-Nutzer selbst ihnen seine Identifikationsdaten bereitstellen muß, und zwar entweder nach Prinzip a), d.h. der Dienst-Anbieter muß die Internet-Nutzer-spezifischen Daten selbst speichern und administrieren, oder nach Prinzip b), d.h. mithilfe einer zentralen Zertifizierungsinstanz).

Eine Analogie aus dem Public Switching Telephone Network PSTN mag die Idee verdeutlichen. Beim Rufaufbau im Telefonnetz wird die Rufnummer des anrufenden Teilnehmers vom Telefonnetz aufgesetzt. Der Betreiber des Telefonnetzes garantiert, daß diese Nummer wirklich den Anschluß der anrufenden Nummer identifiziert, die Rufnummer des anrufenden Teilnehmers ist "network provided" oder "user-provided, verified and passed". Der anrufende Teilnehmer ist nicht in der Lage, die Nummer zu verändern, da sie vom Netzwerk und nicht vom Teilnehmer aufgesetzt wird. Auch andere Telefonnetzteilnehmer können diese Nummer nicht verändern. Damit ist es immer möglich, die an einem Telefongespräch teilnehmenden Anschlüsse sicher zu identifizieren.

Im IP Netz ist dies nicht möglich, da erstens die Absender-IP-Adressen in den IP-Nachrichten gefälscht werden können und zweitens die IP Adressen den Internet-Nutzern nur temporär zur Verfügung gestellt werden. Erfindungsgemäß kann in einem IP Netz jedoch der Internet-Zugangs-Provider als vertrauenswürdige Instanz die IP-Nachricht fälschungssicher mit einer durch das Netzwerk aufgesetzten Information zur Identifikation des Internet-Nutzers versehen.

Die Erfindung nutzt die für den Internet-Zugang übliche Punkt-zu-Punkt Internet-Nutzer-Identifizierung zwischen dem Internet-Nutzer und seinem Internet-Zugangs-Provider aus, um über einen vertrauenswürdigen (mit einem öffentlichen Zertifikat ausgestatteten) Internet-Zugangs-Provider eine gesicherte Identifizierung eines Internet-Nutzers netzweit zur Verfügung zu stellen.

### Zu Punkt 4: Ausführungsbeispiel[e] der Erfindung

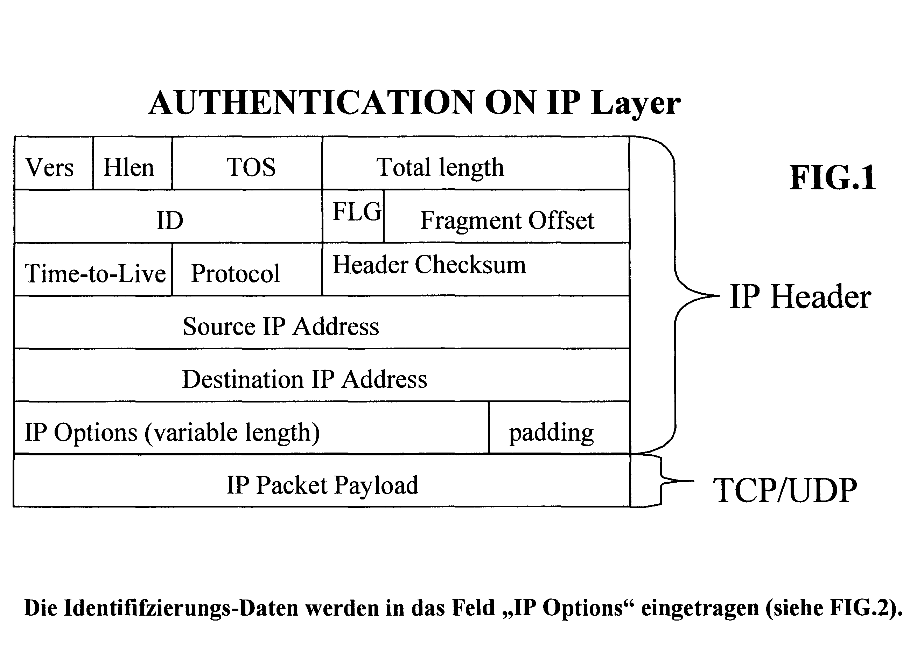

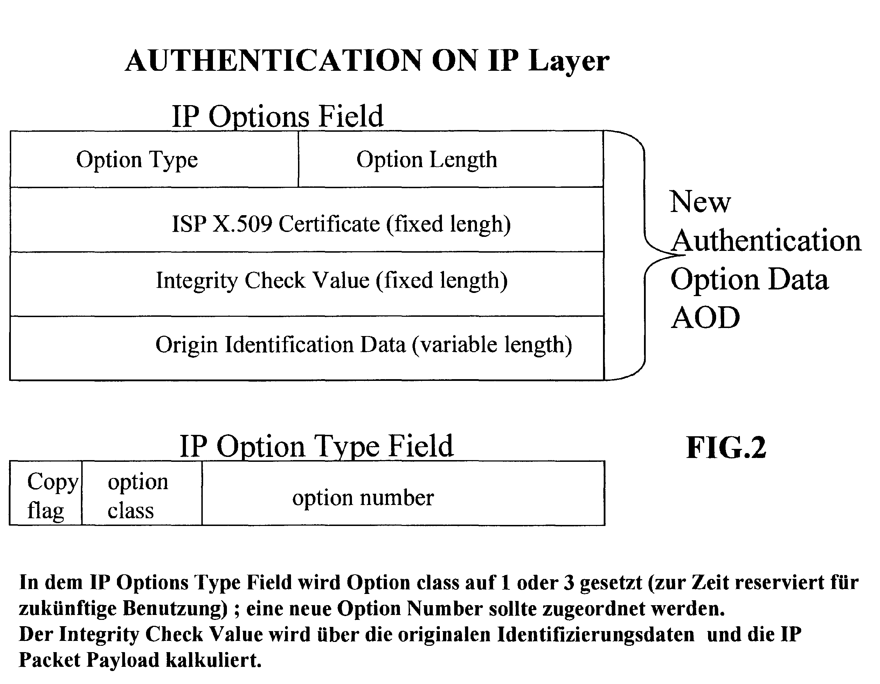

Für eine generische Lösung (Lösung, die unabhängig vom verwendeten Transport - oder Applikationsprotokoll ist) mit möglichst guter Performance wird eine Realisierung auf der IP-Ebene vorgeschlagen (siehe Figuren 1 und 2).

Am POP (Point-of-Presence, Zugangsknoten) des Internet-Zugangs-Providers werden
- die IP-Pakete daraufhin untersucht, ob ein bestimmtes (noch zu definierendes) Flag, ein sogenanntes Authentication-Request Flag gesetzt ist, wodurch für den Internet-Nutzer ein Hinzufügen von Identifikationsdaten pro IP-Paket angefordert werden kann, und/oder
- es wird in einer Datenbank (die eine analoge Funktion besitzt wie die Security Policy Database bei IPSEC) nachgeschaut, ob für den Internet-Nutzer der Dienst "IP-Pakete mit Identifizierungsdaten versehen" angefordert wird. Selektoren können dabei die Destination IP-Address, das Transportprotokoll oder die TCP/UDP Ports sein.

Wenn ja , fügt der Internet-Zugangs-Provider dem IP-Paket-Header die Daten hinzu, die den Internet-Nutzer identifizieren. Möglich ist z.B. eine Telefonnummer des Internet-Nutzers, oder sein für die Subskription seines Internet-Zugangs verwendeter User-Name, die seinem Internet-Zugangs-Provider bekannt ist.

Der Internet-Zugangs-Provider bildet anschließend über das modifizierte IP-Paket einschließlich der vom Nutzer gesendeten unveränderten Nutzdaten eine digitale Unterschrift, um die Identifikationsdaten und die vom Nutzer gesendeten Nutzdaten vor Verfälschung zu sichern (Datenintegrität). Dazu wird eine Prüfsumme über das modifizierte IP Paket berechnet und diese mit dem geheimen Schlüssel des ISP's verschlüsselt (Integrity Check Value). Abschließend fügt der Internet-Zugangs-Provider dem IP-Paket-Header sein elektonisches Zertifikat (ISP X.509 Certificate), welches den öffentlichen Schlüssel des ISP's zur Entschlüsselung der Prüfsumme enthält, hinzu. Somit kann jeder Empfänger der IP-Nachricht die digitale Unterschrift auf Korrektheit überprüfen, indem er die Prüfsumme entschlüsselt und mit der Prüfsumme, die der Empfänger berechnet hat, vergleicht. Außerdem hat der Empfänger die Möglichkeit, über den im Zertifikat genannten Besitzer des Zertifikates (den Internet-Zugangs-Provider) an weitere Daten des Internet-Nutzers (Name, Adresse) zu gelangen. (Dies könnte für Malicious Caller Identification verwendet werden.)

Die vorgeschlagene Realisierung besitzt Ähnlichkeiten mit IPSEC. Der wesentliche Unterschied ist jedoch, daß im Gegensatz zu IPSEC keine point-to-point Authentifizierung sondern eine point-to-multipoint Authentifizierung realisiert werden kann, da alle für die Authentifizierung relevanten Daten (der "Name" des Internet-Nutzers, der Name des Internet-Zugangs-Providers (ISPs) und sein Zertifikat) im IP-Paket enthalten sind. Außerdem liegt weder eine End-to-End noch eine Host-to-Host Authentifizierung vor, sondern eine ISP-to-Host Authentifizierung.

Die Realisierung der Internet-Nutzer-Identifikation auf IP-Ebene erfordert eine neue optionale Funktion des IP-Stacks. Falls diese Funktion in einem Empfänger-Host nicht verfügbar ist, ist die gesamte neue AOD-Information (siehe FIG.2) einer IP-Nachricht zu ignorieren. Diese Funktion wird für unbekannte IP Options bereits heute von Standard-IP-stacks unterstützt.

Da sich die Länge einer IP-Nachricht durch das Einfügen der AOD-Information ändert, müssen sowohl das TotalLength Feld als auch die HeaderChecksum im IP Header neu berechnet werden. Die digitale Unterschrift des Internet-Zugangs-Providers gilt solange, wie sich die Daten in der IP Payload nicht ändern.

Es ist möglich, dass Daten in der IP Payload auf dem Weg der IP-Nachricht zum eigentlichen Kommunikationspartner verändert werden können, z.B. durch autorisierte Proxies (z.B. das VIA Feld bei SIP, IP Adressen bei NAT). Der Proxy berechnet dann ebenfalls TotalLength Feld sowie HeaderChecksum im IP Header neu.
In einem solchen Fall kann der Proxy entweder bereits End-Host der erfindungsgemäß gesicherten Übertragung sein. Dies ist beispielsweise der Fall, wenn der Proxy die Authentifizierung des Internet-Nutzers durchführt um zu prüfen, ob dieser z.B. bereits ein Kunde des Nachrichten-Empfängers ist. Der Proxy überprüft die AOD und sendet die IP Nachricht weiter ohne die AOD.
Oder der Proxy nimmt eine Anpassung der AOD-Information vor und signiert diese Änderungen mittels digitaler Unterschrift. Dazu berechnet der Proxy den Integrity Check Value und überschreibt den bisherigen. Zusätzlich ersetzt er das ISP Zertifikat durch sein Zertifikat und erweitert die Origin Identification Data um Informationen, die den ISP identifizieren.

Der Vorteil der Realisierung auf IP-Ebene gegenüber einer Realisierung in der Transport- oder Anwendungsebene ist es, daß der Internet-Zugangs-Provider im POP sehr schnell sehen kann, ob Identifikationsdaten eingefügt werden sollen oder nicht, da dazu nur der IP Header analysiert oder die Policy Datenbank abgefragt werden muß (Performance-Vorteil). Die Daten der höheren Protokollebenen, die Ende-zu-Ende ausgetauscht werden, werden nicht verändert. Die Applikationen auf Internet-Hosts, die diese neue IP-Option verwenden, benötigen eine erweiterte IP-Netzschnittstelle (IP socket - Interface), um abgehend ggf. das Authentication-Flag für ein IP-Paket zu setzen oder Absender-Identifizierungsdaten an die IP-Netzschnittstelle zu übergeben und ankommend empfangene Absender-Identifizierungsdaten zu lesen. Der ISP, der das neue Internet-Zugangs-Dienstmerkmal "Identifikation von Internet-Nutzern" anbietet, benötigt eine Policy Datenbank, die administriert werden muß. Zusätzlich benötigt der ISP für sich selbst ein Zertifikat einer öffentlichen Zertifizierungsinstanz, welches auch verwaltet und gepflegt werden muß (Update der Certificate-Revocation-Lists usw.).

## Patentansprüche

1. Verfahren zur Identifikation von Internet-Nutzern, demgemäß
ein Internet-Nutzer bei Inanspruchnahme des Internet-Zugangs-Dienstes eines Internet-Zugangs-Providers, mit dem der Internet-Nutzer eine Geschäftsbeziehung unterhält, in einem Internet-Zugangsknoten des Internet-Zugangs-Providers im Rahmen der Zugangsprüfung identifiziert bzw. authentisiert wird,
**dadurch gekennzeichnet, daß**
einer IP-Nachricht des Internet-Nutzers nach erfolgter positiver Zugangsprüfung von dem Internet-Zugangsknoten vor ihrer Weiterleitung eine den Internet-Nutzer identifizierende Information beigefügt wird, wobei die Integrität dieser Information mit kryptographischen Mitteln garantiert wird.

2. Verfahren nach Anspruch 1,
**dadurch gekennzeichnet, daß**
einer IP-Nachricht die den Internet-Nutzer identifizierende Information nur bei Vorliegen einer entsprechenden Vorraussetzung beigefügt wird.

3. Verfahren nach Anspruch 2,
**dadurch gekennzeichnet, daß**
die genannte Vorraussetzung durch den Internet-Nutzer vorgegeben wird.

4. Verfahren nach Anspruch 1 oder 2,
**dadurch gekennzeichnet, daß**
das Vorliegen der genannten Vorraussetzung durch den Zugangskonten geprüft wird, wobei er der IP-Nachricht und/oder einer Datenbank zu diesem Zweck Informationen entnimmt.

5. Verfahren nach einem der Ansprüche 1 bis 4,
**dadurch gekennzeichnet, daß**
das Verfahren auf der Internet-Protokoll-Ebene realisiert wird.

6. Verfahren nach einem der Ansprüche 1 bis 4,
**dadurch gekennzeichnet, daß**
das Verfahren auf der Tansport-Protokoll-Ebene realisiert wird.

7. Verfahren nach einem der Ansprüche 1 bis 4,
**dadurch gekennzeichnet, daß**
das Verfahren auf der Anwender-Protokoll-Ebene realisiert wird.

8. Verfahren nach einem der Ansprüche 1 bis 7,
**dadurch gekennzeichnet, daß**
die Integrität der den Internet-Nutzer identifizierenden Information mit einer digitalen Unterschrift garantiert wird.

9. Internet-Zugangsknoten, der
- einen Internet-Nutzer im Rahmen der Durchführung des Internet-Zugangs-Dienstes identifiziert bzw. authentifiziert,
- nach erfolgreicher Durchführung des Internet-Zugangs-Dienstes einer IP-Nachricht des Internet-Nutzers vor deren Weiterleitung eine den Internet-Nutzer identifizierende Information beifügt, wobei er die Integrität dieser Information mit kryptographischen Mitteln garantiert.

10. Internet-Zugangsknoten nach Anspruch 9,
**dadurch gekennzeichnet, daß**
er einer IP-Nachricht die den Internet-Nutzer identifizierende Information nur bei Vorliegen einer entsprechenden Vorraussetzung beifügt.

11. Internet-Zugangsknoten nach Anspruch 10,
**dadurch gekennzeichnet, daß**
er das Vorliegen der genannten Vorraussetzung mithilfe von Informationen prüft, die er der IP-Nachricht selbst und/oder einer Datenbank entnimmt.
